# EUROPEAN PATENT SPECIFICATION

(11) **EP 0 459 560 B1**
(45) Date of publication and mention of the grant of the patent: **27.10.1999**
(21) Application number: 91201200.2
(22) Date of filing: 17.05.1991
(51) Int. Cl.: C08L 3/08, C08L 23/00, C08K 5/10

(54) **Composition containing a polymer of unsaturated hydrocarbon and a starch derivative**
Zusammensetzung, welche ein Polymer eines ungesättigten Kohlenwasserstoffes und ein Stärkederivat enthält
Composition contenant un polymère d'hydrocarbure insaturé et un dérivé d'amidon

(30) Priority: 28.05.1990 NL 9001212
(43) Date of publication of application: 04.12.1991
(73) Proprietor: CARGILL B.V., NL-4612 PS Bergen op Zoom (NL)
(72) Inventor: Bussink, Jan, Prof. Drs., NL-4625 CT Bergen op Zoom (NL); German, Anton Leendert, Prof. Dr. Ir., NL-5655 JD Eindhoven (NL); Meijer, Henricus Eduard Hubertus, Prof. Dr. Ir., NL-5502 JA Veldhoven (NL); Delrue, Rita Maria, Ing., NL-4621 HR Bergen op Zoom (NL); Zijderveld, Antonius Hendrik, Drs., NL-8171 XT Vaassen (NL)
(74) Representative: Ellowicz, Leo, Drs.

(56) References cited:
- EP-A- 0 417 828
- GB-A- 935 339
- US-A- 2 458 191
- US-A- 3 074 803
- US-A- 4 016 117
- US-A- 4 863 655
- Starch Chemistry and Technology, edited by R.Whistler et al., 1984, pages 346-8

## Description

This invention relates to a composition containing a polymer derived from unsaturated hydrocarbon monomer and a C₁₋₄ alkyl or hydroxyalkyl starch ether having a degree of substition of at least o.25 for improving the biodegrability.

In Dutch patent application 8902321, which is not a prior publication, a composition has been disclosed which contains a polymer of unsaturated hydrocarbon and a C₁₋₄ alkyl or hydroxyalkyl starch ether having a degree of substitution of at least 0.25, and furthermore a compatibilizing agent. As the compatibilizing agent a vinyl or acryl copolymer is used therein, particularly a copolymer of ethylene and vinylacetate (EVA) or a copolymer of ethylene and acrylic acid (EAA).

As disclosed in the abovementioned patent application, this means a considerable advance for materials like polyethylene, polypropylene and polystyrene, as well as for the copolymers of these unsaturated hydrocarbons, as compared with the state of the art, because in this way scores of procents of starch derivative can be incorporated into the material. However a drawback is that a relatively large amount of the compatibilizing agent is necessary, in general 11-19 %. Furthermore, although the use of a plasticizer is not always strictly necessary, there are many purposes for which it cannot be omitted.

Surprisingly, it has now been found that the use of a completely different compatibilizing agent offers important advantages over the use of the vinylic or acrylic copolymer.

The invention provides a composition which contains a polymer of unsaturated hydrocarbon and a C₁₋₄ alkyl or hydroxyalkyl starch ether having a degree of substitution of at least 0.25, and furthermore a compatibilizing agent, wherein the compatibilizing agent comprises one or more esters of C₁₋₄ alcohols and C₆₋₂₀ organic acids.

These esters offer the great advantage that they can be used in a smaller amount than the compatibilizing copolymers, i.e. 1-10 %, and that no plasticizer or lubricating agent is necessary. For if the composition of the invention is subjected to a shaping process, a reaction will take place during the heating, which always occurs during such a processing, of which the nature is not yet completely known, but whereby apparently the ester is decomposed and the free acid provides a lubricating action in some way or other.

U.S. 2,458,191 discloses a mixture of polystyrene and an allyl- or benzylether of starch. The present alkyl or hydroxyalkyl ethers of starch are not disclosed or suggested and also a compatibilizing agent is not mentioned. Furthermore, this publication does not disclose packaging material as an application of the compositions and also biodegradability is not mentioned.

U.S. 4,016,117 discloses the addition to a hydrocarbon polymer (e.g. polyethylene, polypropylene, polystyrene) of starch. Starch derivatives are not mentioned in this reference. Furthermore, an auto-oxidizable substance containing at least one double bond which, when in contact with a transition metal salt auto-oxidizes to generate a peroxide or hydroperoxide, e.g. a fatty acid ester such as ethyl oleate, is added in order to accelerate the biodegradation of the composition in soil containing a transition metal salt. The products are used as biodegradable packaging material. The starch acts as a filler, while in the present application the hydroxyalkyl ether of starch does not or not primarily function as a filler but leads to a "mutual solution" of hydrocarbon polymer and starch derivative and in term this leads to improved properties in terms of strength and elongation.

U.S. 4,863,655 discloses a biodegradable packaging material made from high amylose starch material. The starch can be unmodified or modified such as hydroxypropyl starch. A hydrocarbon polymer and a compatibilizing agent in combination with this starch derivative are not mentioned.

In connection with the decomposition of the ester occuring at elevated temperature, the methyl and ethyl esters are preferred, because the alcohols liberated therefrom by heating or saponification, are more volatile than the propanols and butanols. The acid moiety of the ester can be derived from each of the C₆₋₂₀ carboxylic acids, e.g. caproic acid on the one hand and behenic acid on the other hand, as well as from the carboxylic acids having intermediate numbers of carbon atoms, both naturally occuring acids having even numbers of carbon atoms, and the synthetic acids having odd numbers, as well as mixtures of such acids. Furthermore, these acids may be saturated or unsaturated.

At present esters of oleic acid are preferred, and particularly methyl and ethyl oleate.

The invention also relates to a process for producing articles based on a polymer of unsaturated hydrocarbon, wherein a composition of the invention is subjected to a shaping treatment with the use of heat. Also the invention relates to the articles obtained with the use of this process.

In Dutch application 8902321 stearic acid, oleic acid and di-oleic acid have been mentioned as suitable plasticizers or - perhaps better stated - lubricating agents. According to the present invention the ester used as compatibilizing agent also acts as a lubricating agent. The exact mechanism by which this occurs has not yet been understood. Tentatively it is believed that during the heating occuring in the shaping treatment the ester is distributed throughout the entire composition and simultaneously undergoes a reaction, perhaps saponification, whereby the acid liberated homogeneously throughout the composition acts as a lubricating agent in a physical or chemical way. However, the invention is independent of the theoretical explanation.

As in Dutch patent application 8902321, the polymers of unsaturated hydrocarbons which enter into consideration are in the first place polyolefins, such as the various kinds of polyethylene, polypropylene and polystyrene, as well as copolymers of these unsaturated hydrocarbons.

Just as in Dutch patent application 8902321 it is preferred that the degree of substitution of the etherified starch is 0.4-1.0, and the preferred starch ethers are hydroxypropyl ethers, obtained by condensation of starch with propylene oxide.

In the present material the various components can be present in the following amounts:

| | |
|---|---|
| Polymer of unsaturated hydrocarbon | 20-79 weight % |
| Starch derivative | 20-70 weight % |
| Ester | 1-10 weight % |

A higher value within the abovementioned range will be chosen for the ester content, the higher the chosen content of starch derivative is.

When using more of the starch derivative, and accordingly more of the oleate, the tensile strength of the product decreases somewhat. Because the problem of the biodegradability is most important in the case of packaging materials, for which flexibility is more important than high strength, this decrease in tensile strength is completely acceptable.

### Example

Compositions based on linear low density polyethylene (LLDPE) were prepared. Composition 1 contained 66 weight % of LLDPE, 30 weight % of hydroxypropyl starch and 4 weight % of ethyl oleate. Composition 2 contained 53 weight % of LLDPE, 40 weight % of hydroxypropyl starch and 7 weight % of ethyl oleate. For comparative purposes also a 100 % LLDPE composition was tested. Films were extruded from all three compositions and the tensile strength (TS) and elongation at break (EB) in the machine direction (MD) and in the transverse direction (TD) were measured.
The results were as follows:

| Test | TS | | EB | |
|---|---|---|---|---|
| | MD | TD | MD | TD |
| Composition 1 | 16 | 14 | 680 | 710 |
| Composition 2 | 10 | 4 | 660 | 793 |
| 100% LLDPE | 38 | 36 | 680 | 933 |

## Claims (Claims for the following Contracting State(s): DE, GB, FR, IT, NL, SE, CH, LI, BE, AT, LU, DK)

1. Composition containing a polymer derived from unsaturated hydrocarbon monomer and a C₁₋₄ alkyl or hydroxyalkyl starch ether having a degree of substitution of at least 0.25, and furthermore a compatibilizing agent, wherein the compatibilizing agent comprises one or more esters of C₁₋₄ alcohols and C₆₋₂₀ carboxylic acids.

2. Composition according to claim 1, characterized in that it contains 20-79 weight % of the polymer derived from unsaturated hydrocarbon monomer, 20-70 weight % of the C₁₋₄ alkyl or hydroxyalkyl starch ether having a degree of substitution of at least 0.25, and 1-10 weight % of the ester.

3. Composition according to claim 1 or 2, characterized in that it contains as the ester methyl or ethyl oleate.

4. Composition according to claims 1-3, characterized in that it contains as the starch derivative a condensation product of starch with propylene oxide.

5. Composition according to claims 1-4, characterized in that the starch derivative has a degree of substitution of 0.4-1.0.

6. A process for producing articles based on polymer of unsaturated hydrocarbon, characterized in that a composition obtained according to any of claims 1-5 is subjected to a shaping treatment with the use of heat.

7. Articles obtained with the use of the process according to claim 6.

## Claims (Claims for the following Contracting State(s): ES)

1. A process for preparing a composition containing a polymer derived from unsaturated hydrocarbon monomer and a C₁₋₄ alkyl or hydroxyalkyl starch ether having a degree of substitution of at least 0.25, and furthermore a compatibilizing agent, wherein one or more esters of C₁₋₄ alcohols and C₆₋₂₀ carboxylic acids are used as said compatibilizing agent.

2. A process according to claim 1, characterized in that a composition containing 20-79 weight % of the polymer derived from unsaturated hydrocarbon monomer, 20-70 weight % of the C₁₋₄ alkyl or hydroxyalkyl starch ether having a degree of substitution of at least 0.25 and 1-10 weight % of the ester is prepared.

3. A process according to claim 1 or 2, characterized in that as said ester methyl or ethyl oleate is used.

4. A process according to claims 1-3, characterized in that as said starch derivative a condensation product of starch with propylene oxide is used.

5. A process according to claims 1-4, characterized in that a starch derivative having a degree of substitution of 0.4-1.0 is used.

6. A process for producing articles based on polymer of unsaturated hydrocarbon, characterized in that a composition obtained according to the process of any of claims 1-5 is subjected to a shaping treatment with the use of heat.

7. Articles obtained with the use of the process according to claim 6.

## Patentansprüche (Patentansprüche für folgende(n) Vertragsstaat(en): DE, GB, FR, IT, NL, SE, CH, LI, BE, AT, LU, DK)

1. Mischung, die
- ein von einem ungesättigtem Hydrocarbon-Monomer abgeleitetes Polymer,
- einen C₁₋₄ Alkyl- oder Hydroxyalkyl-Stärkeether mit einem Substitutionsgrad von mindestens 0,25 und
- ein Vereinigungsmittel mit einem oder mehreren Estern eines C₁₋₄ Alkohols und einer C₆₋₂₀ Carboxylsäure enthält.

2. Mischung nach Anspruch 1, **gekennzeichnet durch** 20 bis 79 % des von einem ungesättigtem Hydrocarbon-Monomers abgeleiteten Polymers, 20 bis 70 % des C₁₋₄ Alkyl- oder Hydroxyalkyl-Stärkeethers mit einem Substitutionsgrad von mindestens 0,25 und 1 bis 10 % Ester.

3. Mischung nach Anspruch 1 oder 2, **gekennzeichnet durch** Methyl- oder Ethyloleat als Ester.

4. Mischung nach einem der Ansprüche 1 bis 3, **gekennzeichnet durch** ein Kondensationsprodukt von Stärke und Propylenoxid als Stärkederivat.

5. Mischung nach einem der Ansprüche 1 bis 4, **dadurch gekennzeichnet**, daß das Stärkederivat einen Substitutionsgrad von 0,4 bis 1,0 aufweist.

6. Verfahren zum Herstellen von Gegenständen auf der Basis ungesättigte Hydrocarbone, **dadurch gekennzeichnet**, daß eine Mischung nach einem der Ansprüche 1 bis 5 heißgeformt wird.

7. Gegenstand, der mit dem Verfahren nach Anspruch 6 erzeugt wurde.

## Patentansprüche (Patentansprüche für folgende(n) Vertragsstaat(en): ES)

1. Verfahren zum Herstellen einer Mischung, die ein von einem ungesättigtem Hydrocarbon-Monomer abgeleitetes Polymer, einen C₁₋₄ Alkyl- oder Hydroxyalkyl-Stärkeether mit einem Substitutionsgrad von mindestens 0,25 und ein Vereinigungsmittel enthält, wobei ein oder mehrere Ester eines C₁₋₄ Alkohols und einer C₆₋₂₀ Carboxylsäure als Vereinigungsmittel verwendet werden.

2. Verfahren nach Anspruch 1, **gekennzeichnet durch** 20 bis 79 % des von einem ungesättigtem Hydrocarbon-Monomers abgeleiteten Polymers, 20 bis 70 % des C₁₋₄ Alkyl- oder Hydroxyalkyl-Stärkeethers mit einem Substitutionsgrad von mindestens 0,25 und 1 bis 10 % Ester.

3. Verfahren nach Anspruch 1 oder 2, **gekennzeichnet durch** Methyl- oder Ethyloleat als Ester.

4. Verfahren nach einem der Ansprüche 1 bis 3, **gekennzeichnet durch** ein Kondensationsprodukt von Stärke und Propylenoxid als Stärkederivat.

5. Verfahren nach einem der Ansprüche 1 bis 4, **dadurch gekennzeichnet**, daß das Stärkederivat einen Substitutionsgrad von 0,4 bis 1.0 aufweist.

6. Verfahren zum Herstellen von Gegenständen auf der Basis ungesättigte Hydrocarbone, **dadurch gekennzeichnet**, daß eine Mischung nach einem der Ansprüche 1 bis 5 heißgeformt wird.

7. Gegenstand, der mit dem Verfahren nach Anspruch 6 erzeugt wurde.

## Revendications (Revendications pour l'(les) Etat(s) contractant(s) suivant(s): DE, GB, FR, IT, NL, SE, CH, LI, BE, AT, LU, DK)

1. Composition contenant un polymère dérivé d'un hydrocarbure insaturé monomère et un éther d'(alkyl en C₁-C₄)- ou d'hydroxy(alkyl en C₁-C₄)amidon ayant un degré de substitution d'au moins 0,25, et en plus un agent de compatibilisation, l'agent de compatibilisation comprenant un ou plusieurs esters d'alcools en C₁-C₄ et d'acides carboxyliques en C₆-C₂₀.

2. Composition selon la revendication 1, caractérisée en ce qu'elle contient 20 à 79% en poids du polymère dérivé d'un hydrocarbure insaturé monomère, 20 à 70% en poids de l'éther d'(alkyl en C₁-C₄)- ou d'hydroxy(alkyl en C₁-C₄)amidon ayant un degré de substitution d'au moins 0,25, et 1 à 10% en poids de l'ester.

3. Composition selon la revendication 1 ou 2, caractérisée en ce qu'elle contient, en tant qu'ester, de l'oléate de méthyle ou d'éthyle.

4. Composition selon les revendications 1-3, caractérisée en ce qu'elle contient, en tant que dérivé d'amidon, un produit de condensation d'amidon avec de l'oxyde de propylène.

5. Composition selon les revendications 1-4, caractérisée en ce que le dérivé d'amidon a un degré de substitution de 0,4-1,0.

6. Procédé de production d'articles basés sur un polymère d'hydrocarbure insaturé, caractérisé en ce qu'une composition obtenue selon l'une quelconque des revendications 1-5 est soumise à un traitement de mise en forme avec usage de chaleur.

7. Articles obtenus au moyen du procédé selon la revendication 6.

## Revendications (Revendications pour l'(les) Etat(s) contractant(s) suivant(s): ES)

1. Procédé de préparation d'une composition contenant un polymère dérivé d'un hydrocarbure insaturé monomère et un éther d'(alkyl en C₁-C₄)- ou d'hydroxy(alkyl en C₁-C₄)amidon ayant un degré de substitution d'au moins 0,25, et en plus un agent de compatibilisation, où un ou plusieurs esters d'alcools en C₁-C₄ et d'acides carboxyliques en C₆-C₂₀ sont utilisés en tant que ledit agent de compatibilisation.

2. Procédé selon la revendication 1, caractérisé en ce qu'une composition contenant 20 à 79% en poids du polymère dérivé d'un hydrocarbure insaturé monomère, 20 à 70% en poids de l'éther d'(alkyl en C₁-C₄)- ou d'hydroxy(alkyl en C₁-C₄)amidon ayant un degré de substitution d'au moins 0,25, et 1 à 10% en poids de l'ester est préparée.

3. Procédé selon la revendication 1 ou 2, caractérisé en ce qu'on utilise, en tant que ledit ester, de l'oléate de méthyle ou d'éthyle.

4. Procédé selon les revendications 1-3, caractérisé en ce qu'on utilise, en tant que ledit dérivé d'amidon, un produit de condensation d'amidon avec de l'oxyde de propylène.

5. Procédé selon les revendications 1-4, caractérisé en ce qu'on utilise un dérivé d'amidon ayant un degré de substitution de 0,4-1,0.

6. Procédé de production d'articles basés sur un polymère d'hydrocarbure insaturé, caractérisé en ce qu'une composition obtenue selon le procédé de l'une quelconque des revendications 1-5 est soumise à un traitement de mise en forme avec usage de chaleur.

7. Articles obtenus au moyen du procédé selon la revendication 6.
